# EUROPEAN PATENT APPLICATION

(11) **EP 4 155 240 A1**
(43) Date of publication of application: **29.03.2023**
(21) Application number: 21807903.6
(22) Date of filing: 01.02.2021
(51) Int. Cl.: B65G 17/32, B65G 19/02, B65G 19/20, B67C 11/00, B08B 9/20

(54) **CONTAINER TRANSPORT MECHANISM**

(30) Priority: 22.05.2020 JP 2020089859; 22.05.2020 JP 2020089860; 22.05.2020 JP 2020089861
(71) Applicant: Toyo Seikan Group Engineering Co., Ltd., Yokohama-shi, Kanagawa 230-0001 (JP)
(72) Inventor: TOKUNAGA Yasuhiro, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2021/003448
(87) International publication number: WO 2021/235012

(57) **Abstract**

To provide a simple-structured container transfer system in which chain attachments, even though protruding from link plates in the same direction as the rotation axis of sprockets, are less likely to go out of timing when receiving or delivering containers, so that position variation during transfer of the containers is reduced, and scars or dents on the containers can be prevented. The container transfer system (100) includes a chain (110) made up of inner link plates (111) and outer link plates (115) alternately coupled together in a longitudinal direction of the chain, a plurality of sprockets (119), and a container transfer path (R) in which cylindrical containers (C) in upright position are pushed by chain attachments (113) provided to the chain (110) and transferred along a moving direction of the chain (110). The chain attachments (113) are protruded from the inner link plates (111) in a direction along a rotation axis of the sprockets (119) and toward the container transfer path (R).

## Description

### [Technical Field]

The present invention relates to a container transfer system that transfers containers in container filling equipment, and more particularly to a container transfer system that transfers containers by pushing the containers with chain attachments provided to a chain.

### [Background Art]

Generally, a container transfer system that transfers containers in container filling equipment by pushing the containers with chain attachments provided to a chain is known.

Patent Literature 1, for example, describes a goods sampling apparatus provided with a container transfer system, in which cans transferred from a seaming turret in a can seaming process line to a discharge turret are captured by a pusher chain and conveyed at a constant speed and with a constant pitch on a discharge conveyor to a picking point.

The pusher chain of this goods sampling apparatus described in Patent Literature 1 is passed over a drive sprocket sharing the same rotation axis with the discharge turret that receives cans from the seaming turret, and a driven-side chain sprocket arranged at the picking point.

This pusher chain receives cans between pushers, which are chain attachments formed at predetermined intervals such as to protrude from the outer link plates and inner link plates of the pusher chain in a direction perpendicular to the rotation axis of the sprocket, whereby cans are conveyed at a constant speed and with a constant pitch on the discharge conveyor to the picking point.

### [Citation List]

### [Patent Literature]

[Patent Literature 1] Japanese Patent Application Publication No. 1-285523

### [Summary of Invention]

### [Technical Problem]

There is still some scope of improvement in the container transfer system provided to the goods sampling apparatus described in Patent Literature 1.

Namely, in the container transfer system in the goods sampling apparatus described in Patent Literature 1, the pusher chain is passed over the drive sprocket sharing the same rotation axis with the discharge turret, and the driven-side chain sprocket arranged at the picking point. Since the discharge turret needs to be integral with the container transfer system, the pusher chain and the discharge turret interfere with each other at many points, because of which maintenance and adjustments take time.

The sprocket the pusher chain is passed over sharing the same rotation axis with the rotation axis of the discharge turret requires a horizontally wide space for the pusher chain to be passed over. This could make installation difficult in equipment with limited space.

The sprocket the pusher chain is passed over could be provided separately from the discharge turret and arranged to have a rotation axis perpendicular to the rotation axis of the discharge turret. This would mean forming the pushers that are chain attachments such as to protrude from the link plates making up the pusher chain toward the same direction as the rotation axis of the sprocket. However, between the link plates are provided play, or a small clearance, in the direction along the rotation axis of the sprocket, and any imbalance in this clearance may cause the timing of receiving or delivering a can with a pusher to become out of sync, or cause a scar on the can due to a change in the contact point between cans and pushers.

The present invention solves the above problem and aims at providing a simple-structured container transfer system in which pushers or chain attachments, even though protruding from link plates in the same direction as the rotation axis of sprockets, are less likely to go out of timing when receiving or delivering containers, so that position variation of the containers during transfer is reduced, and scars or dents on the containers can be prevented.

### [Solution to Problem]

The container transfer system of the present invention is a container transfer system including: a chain; a plurality of sprockets the chain is passed over; chain attachments provided to the chain; and a container transfer path in which cylindrical containers in upright position are pushed by the chain attachments and transferred along a moving direction of the chain, the chain being made up of pairs of left and right inner link plates, bushings press-fit in bushing holes of the inner link plates, connecting pins rotatably inserted in the bushings, and pairs of left and right outer link plates having pin holes for the connecting pins to fit in, the inner link plates and outer link plates being alternately coupled together along a longitudinal direction of the chain, the chain attachments being protruded from the inner link plates in a direction along a rotation axis of the sprockets and toward the container transfer path, whereby the above problem is solved.

### [Advantageous Effects of Invention]

According to the container transfer system set forth in claim 1, the chain attachments are provided such as to protrude from the inner link plates toward a direction along the rotation axis of the sprockets and toward the container transfer path. Therefore the chain attachments are unlikely to shift because of an imbalance between small gaps provided as a predetermined clearance between the inner link plates and the outer link plates, and are less likely to go out of timing when receiving or delivering containers, so that position variation of the containers during transfer is reduced, and scars or dents on the containers can be prevented.

According to the configuration set forth in claim 2, the rotation axis of the sprockets is oriented perpendicular to the center axis of containers being transferred on the container transfer path in upright position, and the chain attachments are shaped such as to make contact with the containers being transferred on the container transfer path in upright position in an area closer to the chain than a widthwise center of the container. Each chain attachment can therefore reliably contact the container on the side facing the chain when receiving the container from a rotating device such as a discharge turret, and cause the container to travel along the opposite side of the transfer path from the chain. Thus containers being transferred can be prevented from getting out of their positions, and the containers can be delivered to or received from the production machine in a stable manner.

According to the configuration set forth in claim 3, the contact edge of each chain attachment is formed such that the nearer to the chain, the more inclined toward the moving direction of the chain. The contact edge of the chain attachment can therefore make line contact with the side face of the container so that there is no local application of force on the container as in the case with point contact with the side face of the container, and thus dents or scars on the sides of the containers can be prevented reliably.

According to the configuration set forth in claim 4, the chain attachments are integrally formed with the inner link plates, and there is no need to consider possible misalignment between inner link plates and chain attachments as in the case where the inner link plates and chain attachments are separately formed.

The number of necessary molds and components for connecting inner link plates and chain attachments are reduced, so that cost increases can be minimized.

According to the configuration set forth in claim 5, the chain moves in sliding contact with a slide guide disposed parallel to the container transfer path, and the slide guide is provided with a restricting member that guides inner sides of the pairs of inner link plates. This way, displacement of the inner link plates in the direction along the rotation axis of the sprockets can be restricted within a very small range of clearance that is provided to allow the restricting member and inner link plates to slide against each other.

According to the configuration set forth in claim 6, a clearance of not greater than 0.8 mm is provided between inner sides of the inner link plates and the restricting member. This allows the restricting member and the inner link plates to stay in sufficient sliding contact with each other, and at the same time, displacement of the inner link plates in the direction along the rotation axis of the sprocket can be restricted within a very small range.

### [Brief Description of Drawings]

[Fig. 1] Fig. 1 is a schematic diagram illustrating one example of container filling equipment S having a container transfer system 100 according to one embodiment of the present invention.
[Fig. 2] Fig. 2 is a schematic diagram illustrating the vicinity of the container transfer system 100 in one example of container filling equipment S having the container transfer system 100 according to one embodiment of the present invention.
[Fig. 3] Fig. 3 is a perspective view illustrating a chain 110 in the container transfer system 100 according to one embodiment of the present invention.
[Fig. 4] Fig. 4 is a top plan view illustrating the chain 110 in the container transfer system 100 according to one embodiment of the present invention.
[Fig. 5] Fig. 5 is an A-A' cross section illustrating the chain 110 in the container transfer system 100 according to one embodiment of the present invention.
[Fig. 6] Fig. 6 is a schematic diagram illustrating a container C being conveyed by the chain 110 in the container transfer system 100 according to one embodiment of the present invention.
[Fig. 7] Fig. 7 is an enlarged view illustrating the container C being conveyed by the chain 110 in the container transfer system 100 according to one embodiment of the present invention.
[Fig. 8] Fig. 8 is a schematic diagram illustrating a container C being conveyed by a chain 210 that is one example shown for reference.
[Fig. 9] Fig. 9 is a B-B' cross section illustrating the chain 210 that is one example shown for reference.

### [Description of Embodiment]

A container transfer system 100 according to one embodiment of the present invention is described below with reference to the drawings.

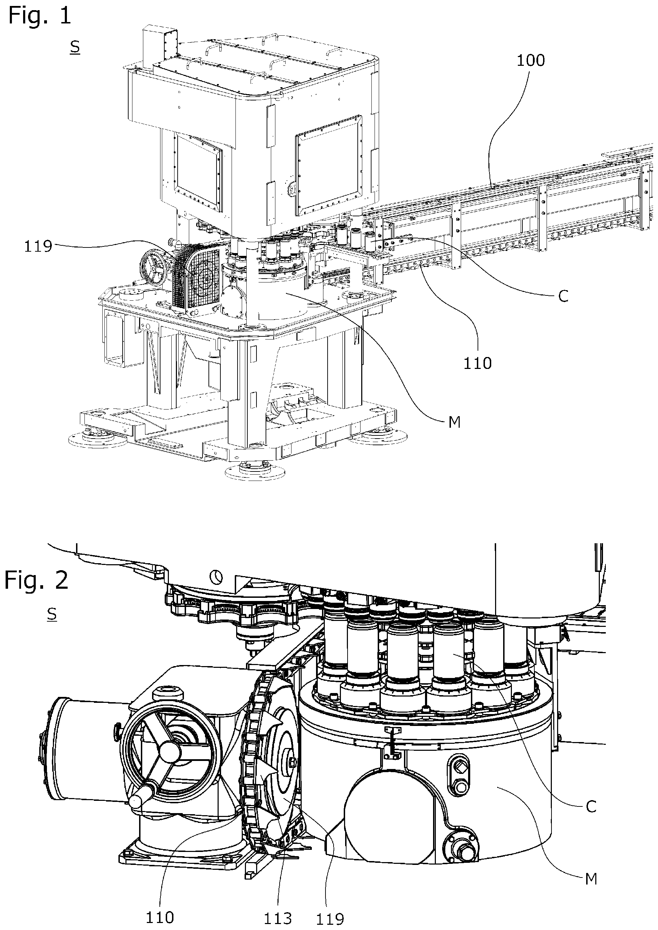

The container transfer system 100 conveys containers C in container filling equipment S, and includes, as shown in Fig. 1, Fig. 2, and Fig. 7, a chain 110 running on a slide guide (not shown) in sliding contact therewith, a drive sprocket 119 and a driven sprocket (not shown) the chain 110 is passed over, and a container transfer path R, in which containers C in upright position are pushed by chain attachments 113 provided to the chain 110 and transferred along the moving direction of the chain 110.

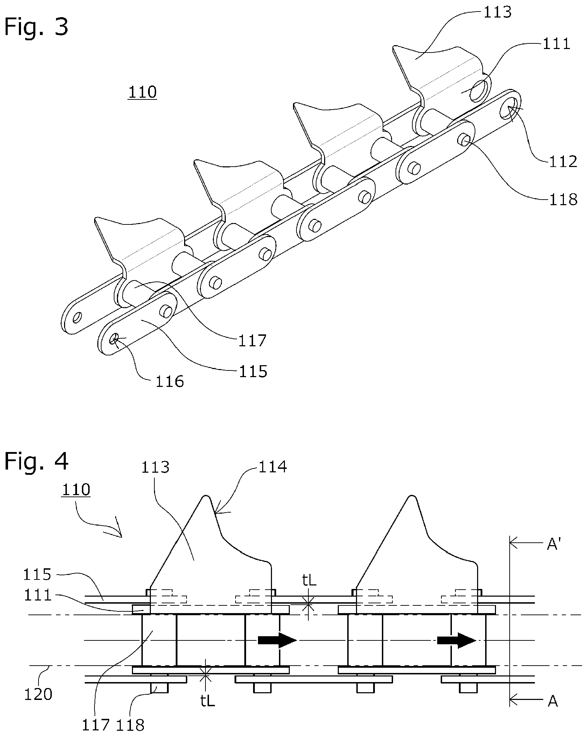

The chain 110 includes, as shown in Fig. 3 to Fig. 5, pairs of left and right inner link plates 111 and pairs of left and right outer link plates 115, the inner link plates 111 having two bushing holes 112 into which bushings 117 are press-fit, and the outer link plates 115 having two pin holes 116 for connecting pins 118 to fit in.

The chain 110 slides on the slide guide (not shown), on which a guide rail 120 serving as a restricting member is disposed, with the pairs of inner link plates 111 holding the guide rail from the left and right sides.

The drive sprocket 119 and driven sprocket (not shown) have horizontal rotation axes so that the chain 110 is passed over the sprockets vertically.

The pairs of left and right inner link plates 111 are connected together via the bushings 117 press-fit in the bushing holes 112 to stay in the same relative positions. The pairs of left and right outer link plates 115 are connected together by connecting pins 118 rotatably inserted in the bushings 117 and fitted in the pin holes 116 to stay in the same relative positions.

There is provided a predetermined clearance tL between the inner link plates 111 and adjacent outer link plates 115. The pairs of left and right inner link plates 111 and pairs of left and right outer link plates 115 are configured to be rotatable relative to each other by relative rotation between the bushings 117 and the connecting pins 118.

Chain attachments 113 protruding toward the container transfer path R are formed on top of the inner link plates 111 on one of the left and right sides facing the container transfer path R.

The chain attachment 113 has a contact edge 114 that makes contact with a container C being transferred on the container transfer path R to push it along the conveying direction. The contact edge 114 is configured to touch the container C being transferred on the container transfer path R in upright position at a point closer to the chain 110 than the widthwise center of the container C, and such that the nearer to the chain 110, the more inclined toward the moving direction of the chain 110.

A transfer guide (not shown) is provided on one side of the chain 110 opposite from the container transfer path R to prevent the containers C from falling off from the container transfer path R.

The chain is guided on the path, with the bushings 117 making sliding contact with the upper surface of the guide rail 120 and inner sides of the pairs of left and right inner link plates 111 making sliding contact with the side faces of the guide rail 120.

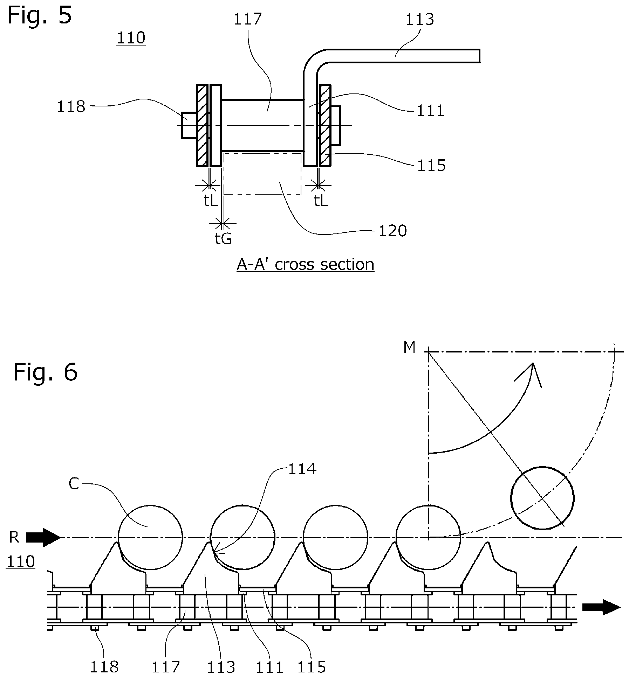

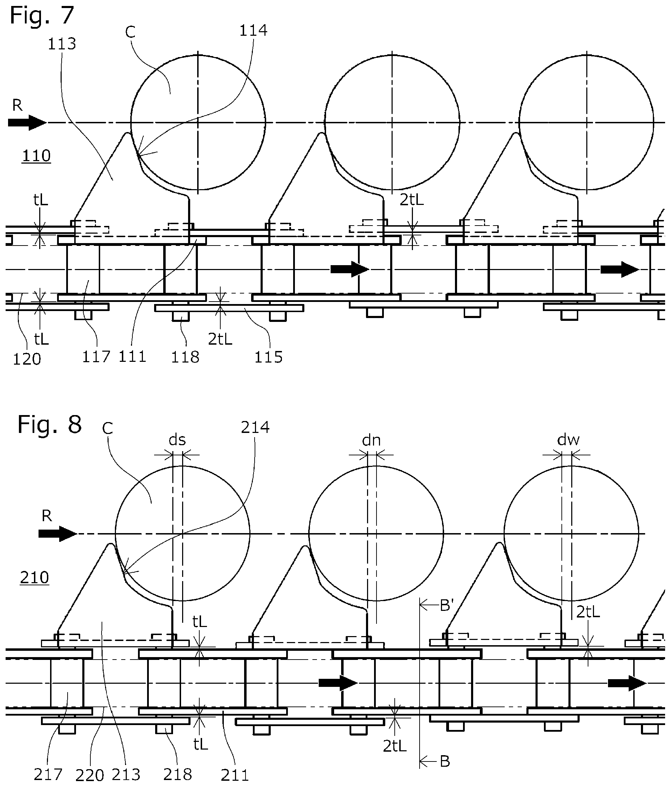

A method of transferring containers C by the container transfer system 100 that is one embodiment of the present invention is described next with reference to Fig. 6 and Fig. 7.

Containers C, after being processed in a preceding step such as a filling machine, travel on a container transfer path R (not shown) toward a production machine M such as a can seaming machine.

The chain 110 moves in sync with the production machine M, so that the chain attachments 113 can bring each container C to a position suitable for transfer at a constant timing at which each container C reaches a transfer point where the container moves over from the container transfer path R onto the production machine M.

The chain attachments 113 convey the containers C by pushing a side face of the containers C with the contact edge 114. The contact edge 114 makes contact with the container C at a point closer to the chain 110 than the widthwise center of the container C, and therefore can cause the containers C received from the production machine M to travel along the transfer guide (not shown). Thus containers C being transferred are prevented from getting out of position, and the containers C can be delivered to or received from the production machine M in a stable manner.

The nearer to the chain 110, the more inclined the contact edge 114 is toward the moving direction of the chain 110, which means that the area where the contact edge 114 can make contact with the side face of the container C stretches linearly over a certain distance. This allows the container C to make contact with the contact edge 114 over a linearly extended area by temporarily undergoing slight deformation even when the contact edge 114 momentarily makes hard contact with the side face of the container C. Thus no large force is applied locally to the side face of the container C, and dents or scars on the side face of the container C can be prevented.

Since the contact edge 114 is formed such that the nearer to the chain 110, the more inclined toward the moving direction of the chain 110, any displacement of the chain attachment 113 in the width direction of the chain 110 may change the contact point between the container C and the contact edge 114.

This may cause the delivering or receiving of the container C between the production machine M and the chain attachments 113 to go out of timing and may result in noise generated when the container C comes into contact with the chain attachment 113. A change in the direction in which the contact edge 114 pushes the container C may result in the container C being pushed excessively against the transfer guide (not shown) and cause scars or dents.

Considering further the risk of scars or dents that could be caused by clamping of the container C between the chain attachment 113 and a pocket (not shown) in the production machine M when the container C is delivered or received between the production machine M and the chain attachments 113, it is important to minimize displacement of the chain attachments 113 in the width direction of the chain 110 for stable transfer of containers C.

A major factor that can lead to displacement of chain attachments in the width direction of the chain for example is an imbalance in the predetermined clearance tL provided between the inner link plates and the outer link plates of the chain.

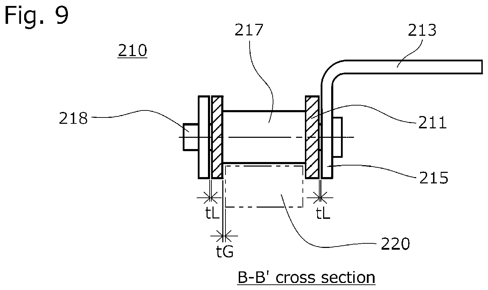

Fig. 8 and Fig. 9 illustrate a chain 210 that is an example shown for reference. The chain attachments 213 are provided to the outer link plates 215.

Since the guide rail 220 provided on a slide guide (not shown) makes sliding contact with the inner sides of the pairs of inner link plates 211 on the left and right sides, the range of displacement of the inner link plates 211 in the width direction of the chain 210 is within the range of the clearance tG.

On the other hand, the predetermined clearance tL between the inner link plates 211 and the outer link plates 215 for allowing them to rotate relative to each other can vary, sometimes becoming wider on one side, when the pairs of left and right inner link plates 211 and pairs of left and right outer link plates 215 displace from each other in the width direction of the chain 210 as the chain 210 slides on the slide guide (not shown).

The shortest distance dn from the center of the container C to the chain attachment 213 when the chain attachment 213 is displaced away from the container transfer path R due to an imbalance in the clearance tL is shorter than ds, the shortest distance from the center of the container C to the chain attachment 213 when there is no imbalance in the clearance tL. The shortest distance dw from the center of the container C to the chain attachment 213 when the chain attachment 213 is displaced closer to the container transfer path R due to an imbalance in the clearance tL is wider than ds.

If there is an imbalance in the clearance tL, i.e., if there is a difference between ds and dn, or between ds and dw, this becomes a factor that causes the chain attachment 213 to go out of timing when delivering or receiving a container C to or from the production machine M.

The chain 110 in the container transfer system 100 according to one embodiment of the present invention has the chain attachments 113 provided to the inner link plates 111. Therefore, even when there is an imbalance in the clearance tL between the outer link plates 115 and the inner link plates 111, displacement of the chain attachments 113 in the width direction of the chain 110 can be restricted within the range of the clearance tG. Thus variation in position or timing when the contact edge 114 makes contact with the container C can be kept minimal.

That is to say the delivery or reception of containers C between the production machine M and the chain attachments 113 can be performed in a stable manner.

The chain 110 in the container transfer system 100 according to one embodiment of the present invention has the chain attachments 113 integrally formed with the inner link plates 111. Since there is no need to prepare components for connecting the chain attachments 113 to the inner link plates 111, the chain can be reduced in weight, and there are no worries of the chain attachments dropping off, as well as a cost increase can be minimized, compared to the case where the chain attachments 113 are formed separately from the inner link plates 111.

Moreover, there is no need to consider adverse effects of possible misalignment between chain attachments 113 and inner link plates 111 when they are connected, on the timing of delivering or receiving the container C between the production machine M and the chain attachments 113.

The clearance tG should more preferably be not greater than the maximum of 0.8 mm. This way, variation in the position or timing of contact between the container C and the contact edge 114 can be reliably kept minimal.

While one embodiment of the present invention has been described above in detail, the present invention is not limited to the embodiment described above. Various design changes may be made without departing from the scope of the claims set forth in the claims.

While the chain attachments in the above embodiment are described as being integrally formed with the inner link plates on the side facing the container transfer path, the configuration of the chain attachments is not limited to this. For example, the chain attachments may be formed separately from the inner link plates, or, may be connected to both of the pairs of left and right inner link plates.

The slide guide in the above embodiment is described as being provided with a guide rail serving as a restricting member that makes sliding contact with the inner sides of the inner link plates. The configuration of the restricting member is not limited to this. For example, the inner link plates may be formed with an outer peripheral edge that is larger than the outer peripheral edge of the outer link plates, while the restricting member may be formed as grooves for the inner link plates to slide on.

While the container transfer system in the above embodiment is described as being located between a filling machine and a can seaming machine, the arrangement of the container transfer system is not limited to this. For example, the container transfer system may be disposed between a container cleaning machine and a container drying machine.

### [Reference Signs List]

- 100, 200: Container transfer system
- 110, 210: Chain
- 111, 211: Inner link plate
- 112: Bushing hole
- 113, 213: Chain attachment
- 114, 214: Contact edge
- 115, 215: Outer link plate
- 116: Pin hole
- 117, 217: Bushing
- 118, 218: Connecting pin
- 119: Drive sprocket
- 120, 220: Guide rail (restricting member)
- M: Production machine
- S: Container filling equipment
- C: Container
- tL: Clearance between inner link plates and outer link plates
- tG: Clearance between inner link plates and guide rail
- R: Container transfer path

## Claims

1. A container transfer system comprising: a chain; a plurality of sprockets the chain is passed over; chain attachments provided to the chain; and a container transfer path in which cylindrical containers in upright position are pushed by the chain attachments and transferred along a moving direction of the chain,
the chain being made up of pairs of left and right inner link plates, bushings press-fit in bushing holes of the inner link plates, connecting pins rotatably inserted in the bushings, and pairs of left and right outer link plates having pin holes for the connecting pins to fit in, the inner link plates and outer link plates being alternately coupled together along a longitudinal direction of the chain,
the chain attachments being protruded from the inner link plates in a direction along a rotation axis of the sprockets and toward the container transfer path.

2. The container transfer system according to claim 1, wherein the rotation axis of the sprockets is oriented perpendicular to a center axis of containers being transferred on the container transfer path in upright position, and
the chain attachments are shaped such as to make contact with the containers being transferred on the container transfer path in upright position in an area closer to the chain than a widthwise center of the container.

3. The container transfer system according to claim 1 or 2, wherein the chain attachments have a contact edge that makes contact with the containers on the container transfer path and pushes the containers in the moving direction of the chain,
the contact edge being formed such that the nearer to the chain, the more inclined toward the moving direction of the chain.

4. The container transfer system according to any one of claims 1 to 3, wherein the chain attachments are integrally formed with the inner link plates.

5. The container transfer system according to any one of claims 1 to 4, wherein the chain moves in sliding contact with a slide guide disposed parallel to the container transfer path,
the slide guide being provided with a restricting member that guides inner sides of the pairs of inner link plates.

6. The container transfer system according to claim 5, wherein a clearance of not greater than 0.8 mm is provided between inner sides of the inner link plates and the restricting member.
